# EUROPEAN PATENT APPLICATION

(11) **EP 1 256 949 A2**
(43) Date of publication of application: **13.11.2002**
(21) Application number: 01121718.9
(22) Date of filing: 17.09.2001
(51) Int. Cl.: G11B 19/02

(54) **Digital recording/reproducing apparatus**

(30) Priority: 10.05.2001 JP 2001140276
(71) Applicant: Kabushiki Kaisha Toshiba, Tokyo (JP)
(72) Inventor: Kikuchi, Shinichi, Minato-ku, Tokyo 105-8001 (JP); Nozaki, Mitsuyuki, Minato-ku, Tokyo 105-8001 (JP)
(74) Representative: HOFFMANN - EITLE

(57) **Abstract**

There is disclosed an apparatus for automatically reflecting a audio language setting in a DVD video in setting of recording/reproducing in a DVD-RTR. An optical disc (DVD-RAM disc, etc.) for storing AV information (TV signal, etc.) corresponding to a plurality of audio languages (Japanese, English, etc.) and sound mode information (monaural, dual-monaural, stereo, etc.) associated with these audio languages is used to perform recording or reproducing based on a DVD-RTR format or on a DVD video format. When the AV information includes a plurality of audio languages (yes in ST404), and a specified audio language (e.g., English) for use in the DVD video format is used in the DVD-RTR format (yes in ST408), then the specified audio language (English) is used in recording or reproducing based on the DVD-RTR format (ST412).

## Description

The present invention relates to improvement of a digital recording/reproducing apparatus which uses a removable optical disc. The present invention relates particularly to a technique for eliminating intricacy regarding a recording setting associated with sound in a DVD recorder in which a plurality of types of sound languages (English, Japanese, and the like), a plurality of types of sound modes (monaural, dual-monaural, stereo, and the like) and a plurality of types of video formats (DVD video, DVD real-time recording, and the like) are supported.

In recent years, an optical disc reproducing system in which audio-visual (AV) information including a dynamic image is recorded has been developed, and has generally spread for a purpose of movie software, karaoke, and the like. Above all, DVD video has remarkably spread. For a standard of DVD video, in accordance with a MPEG2 system layer, MPEG2 is supported in a dynamic image compression system, and AC audio and MPEG audio are supported in sound. Moreover, in the DVD video standard, sub image data in which bit map data is subjected to run length compression for subtitle and menu, and special control data (navigation pack) for special reproducing such as fast forward/rewind are defined. Furthermore, in the DVD video standard, ISO9660 and micro UDF (UDF bridge) are supported so that data can be read with a computer. As the standard of an information medium itself for storing AV information, following DVD-ROM as media for use in DVD video, standards of DVD-RAM (repeatedly readable/writable), DVD-R (write once), and DVD-RW (repeatedly rewritable) have been completed. Moreover, DVD-RAM drive (or DVD-R/DVD-RW drive) has also started to spread as computer peripherals.

At present, the standard of DVD-real-time recording (RTR) has been completed as DVD standard which utilizes DVD-RAM (or DVD-R/DVD-RW) and which is recordable/reproducible in real time, and a verification operation ended in spring, 2000. This standard is based on the standard of the presently spread DVD video (DVD-ROM). A file system for the DVD-RTR has also been standardized. Under these situations, DVD video recorder based on the DVD-RTR standard has started to be on the market.

Many of DVD recorders now on the market support both formats of the DVD video and DVD-RTR. These are formats of the same DVD family. Unless both formats are supported, commercial property (appeal to a buyer layer) of DVD recorder is remarkably deteriorated.

However, even when both formats are supported, the formats have no correlation with respect to various initial settings, and settings are completely different. Therefore, even with the single recorder, a user needs to individually perform a similar setting with respect to both formats (in both modes). A problem occurs that the settings become intricate.

The present invention has been developed in consideration of the aforementioned situations, and an object thereof is to provide a digital recording/reproducing apparatus in which a setting (language setting, and the like) regarding sound in one format (DVD video) is reflected in setting of recording/reproducing in another format (DVD-RTR), and intricacy of setting is eliminated.

To achieve the aforementioned object, in a digital recording/reproducing apparatus according to an embodiment of the present invention, a sound language setting in a second format (DVD-RTR) is matched with the sound language setting in a first format (DVD video).

That is, the present invention can be utilized in a digital recording/reproducing apparatus in which an information medium (DVD-RAM disc 100 and/or IC memory/HDD 700) for storing audio-visual information (TV broadcast signal recorded with DVD-RTR, reproducing information of DVD video, and the like) corresponding to a plurality of types of sound languages (English, Japanese, and the like) and sound mode information (monaural, dual-monaural, stereo, and the like) associated with these sound languages is used to perform recording or reproducing based on at least one of first and second formats (DVD-RTR, DVD video, and the like).

The apparatus comprises: first judging means (900; step ST404) for judging whether or not the audio-visual information (TV broadcast signal, and the like) includes the plurality of types of sound languages (English, Japanese, and the like) (whether or not broadcast is bilingual); and second judging means (step ST408) for judging whether or not a specific sound language (e.g., English) set in the first format (DVD video) is applied to the second format (DVD-RTR), when the audio-visual information (TV broadcast signal) includes the plurality of types of sound languages (English, Japanese) (yes in step ST404).

The apparatus is constituted to utilize the specified audio language (English) in recording or reproducing based on the audio format (DVD-RTR) (step ST412), when the specified audio language (English) set in the first format (DVD video) is applied to the audio format (DVD-RTR) (yes in step ST408).

The second format (DVD-RTR) can have predetermined management information (VMG), and the management information (VMG) can include one or more pieces of stream information (STI). In this case, the sound mode information (monaural, dual-monaural, stereo, and the like) is recorded in each stream information (STI/A_ART/audio channel number) (step ST530 or steps ST5304 to ST5308).

An audio data portion of the audio-visual information (TV broadcast signal, and the like) is recorded in the information medium (100) by a data unit (AAU) having a predetermined header. The digital recording/reproducing apparatus further comprises means (step ST5402) for judging a sound mode (monaural, dual-monaural, stereo, and the like) of the audio data to be recorded in the information medium (100); and means (steps ST5404 to ST5408) for setting the judged sound mode (monaural, dual-monaural, or stereo) in a header ("mode" portion) of the data unit (AAU).

In the aforementioned constitution, for example, a sound language setting, for example, in DVD video is reflected in a setting of recording/reproducing of DVD-RTR, and intricacy of setting can be eliminated.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the whole constitution of a digital recording/reproducing apparatus (DVD-RTR video recorder) with a sound changeover function according to one embodiment of the present invention.
FIG. 2 is a diagram showing a directory structure of an information file recorded by the apparatus of FIG. 1.
FIG. 3 is a diagram showing a data structure of information (video object) recorded by the apparatus of FIG. 1.
FIG. 4 is a diagram showing a data structure of management information (M_VOB_STI, and the like) recorded by the apparatus of FIG. 1.
FIG. 5 is a diagram showing a pack structure of audio information (linear PCM audio) recorded by the apparatus of FIG. 1.
FIG. 6 is a diagram showing a pack structure of audio information (MPEG audio) recorded by the apparatus of FIG. 1.
FIG. 7 is a flowchart showing the whole operation of the apparatus of FIG. 1.
FIG. 8 is a flowchart of an operation for selecting a broadcast program in the apparatus of FIG. 1.
FIG. 9 is a flowchart of a recording operation in the apparatus of FIG. 1.
FIG. 10 is a flowchart of an interrupt processing in the apparatus of FIG. 1.
FIG. 11 is a flowchart of a setting processing of stream information (STI) in the apparatus of FIG. 1.
FIG. 12 is a flowchart of an encoding processing of audio data in the apparatus of FIG. 1.
FIG. 13 is a flowchart showing the whole reproducing operation (former half) in the apparatus of FIG. 1.
FIG. 14 is a flowchart showing the whole reproducing operation (latter half) in the apparatus of FIG. 1.
FIG. 15 is a flowchart showing a cell reproducing processing (former half) in the apparatus of FIG. 1.
FIG. 16 is a flowchart showing the cell reproducing processing (latter half) in the apparatus of FIG. 1.
FIG. 17 is a diagram showing contents of management information to be recorded by the apparatus of FIG. 1.

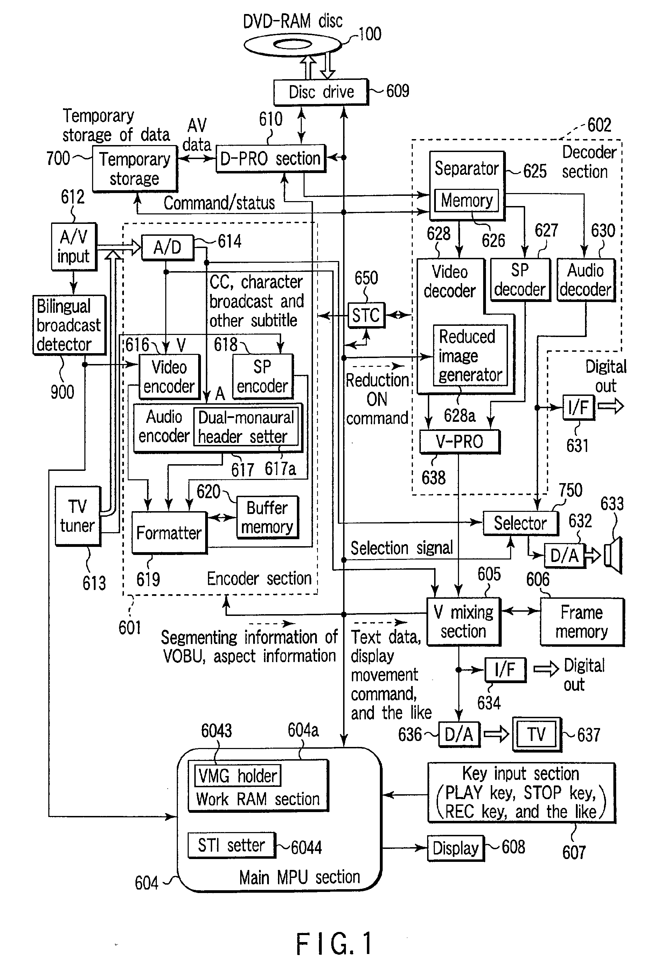

A digital recording/reproducing apparatus (DVD-RTR recorder) according to one embodiment of the present invention will be described hereinafter with reference to the drawings. FIG. 1 is a block diagram showing a whole constitution of a digital recording/reproducing apparatus (DVD-RTR video recorder) with a sound changeover function according to one embodiment of the present invention. The apparatus basically performs real-time video recording using a recordable optical disc (DVD-RAM disc, DVD-RW disc, DVD-R disc) 100, and includes a reproducing function of an optical disc for exclusive use in reproducing (DVD-ROM disc, recorded DVD-R disc).

The apparatus of FIG. 1 is constituted of: an encoder section 601; a decoder section 602; a main microcomputer (MPU) section 604: a video (V) mixing section 605; a frame memory 606; a key input section 607; a display 608; a DVD-RAM (and/or DVD-R/DVD-RW) drive 609; a data processor (D-PRO) 610; an A/V input 612; a TV tuner 613; an audio digital I/F 631; an audio D/A section 632; a speaker 633 (a driving audio amplifier is not shown); a video digital I/F 634; a TV D/A section 636; an external monitor TV 637; a system time counter (STC) 650; a temporary storage (large-capacity IC memory and/or HDD recorder unit) 700; a selector 750 of an audio signal; a bilingual broadcast detector (multilingual detector) 900; and the like.

A main MPU section 604 has therein a stream information (STI) setter 6044 and other control program (firmware). Moreover, the MPU section 604 has therein a work RAM 604a for use in executing the control program. A management information (VMG) holder 6043 is disposed in the work RAM 604a.

The encoder section 601 is constituted of an A/D section 614; a video encoder 616; an audio encoder 617 including a dual-monaural header setter 617a; a subpicture (SP) encoder 618; a formatter 619; and a buffer memory 620. Moreover, the decoder section 602 is constituted of a separator 625 including a memory 626, a video decoder 628 including a reduced image (thumb nail) generator 628a, a subpicture (SP) decoder 627, an audio decoder 630, and a video processor (V-PRO) 638.

Recording (recording of AV information) is performed by the disc drive (DVD-RAM drive) 609, in which the removable DVD-RAM (or DVD-R/DVD-RW) disc 100 is used, via the encoder section 601. The disc drive 609 can play back not only the DVD-RAM (or DVD-R/DVD-RW) disc 100 but also the DVD video (or DVD-ROM) disc 100. That is, reproducing is performed using the disc drive 609 via the decoder section 602. The function of playing back the DVD video is basically the same as a DVD video player generally on the market.

A flow of an actual video signal in the apparatus of FIG. 1 is as follows. First, an analog AV signal inputted via the A/V input 612 or an analog TV signal obtained from the TV tuner 613 is converted to a digital signal in A/D section 614 of the encoder section 601. The video signal subjected to digital conversion is inputted to the video encoder 616, and the audio signal subjected to digital conversion is inputted to the audio encoder 617. Moreover, character broadcast data and other character data obtained from the TV tuner 613 are inputted to the subpicture (SP) encoder 618. The inputted video signal is MPEG compressed in the video (main picture) encoder 616. The inputted audio signal is subjected to the AC3 or MPEG audio compression in the audio (sound) encoder 617. Moreover, the inputted character data is subjected to run length compression in the SP encoder 618.

For the respective encoders 616 to 618, the data is packeted to indicate 2048 bytes when the compressed data is packed, and the packeted video data, audio data and subpicture data are inputted to the formatter 619. The formatter 619 appropriately uses the buffer memory 620, packs and multiplexes the inputted packet data, and sends the multiplexed video pack, audio pack and subpicture pack to the D-PRO 610.

The D-PRO 610 forms an ECC block for every 16 packs (32 or more packs in a next-generation DVD video) in the present DVD video, and attaches error correction data to the block. A data stream obtained in this manner is recorded in the optical disc (DVD-RAM, DVD-RW or DVD-R) 100 by the disc drive 609. Here, with the disc drive 109 in a busy state for seeking or track jump, the recorded data is stored in the temporary storage 700 (IC memory and/or HDD recorder unit), until the disc drive 609 is prepared for recording the data.

Furthermore, the formatter 619 prepares respective segmenting information during recording (by interrupt in a top of GOP), and periodically sends the prepared segmenting information to the MPU section 604. Examples of the segmenting information include the number of packs of a video object unit (VOBU), end address of one picture from the top of VOBU, reproducing time of VOBU, and the like. Each VOBU includes the video pack, and audio pack and/or subpicture pack. The information can be accessed by the unit of the VOBU. Additionally, one video file is disposed in one disc in DVD-RTR (recording/reproducing DVD).

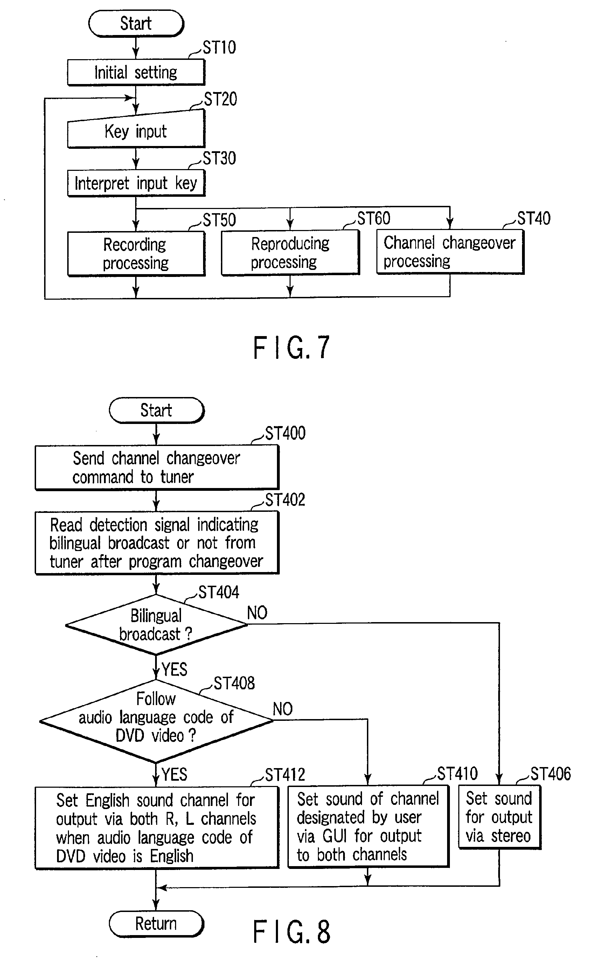

The TV broadcast signal is received by the TV tuner 613. The sound signal of the TV broadcast signal can have a plurality of sound modes. The sound signal received by the TV tuner 613 is, for example, monaural (L = R), stereo (L&R), or bilingual (multilingual), that is, dual-monaural (L = main sound/Japanese), R = sub sound/foreign languages, and the like). The bilingual broadcast detector (multilingual detector) 900 detects whether or not the received sound signal is bilingual (multilingual), that is, dual-monaural. The information detected by the bilingual broadcast detector 900 is inputted to the encoder section 601 and main MPU section, and subjected to various settings (described later with reference to flowcharts of and after FIG. 7).

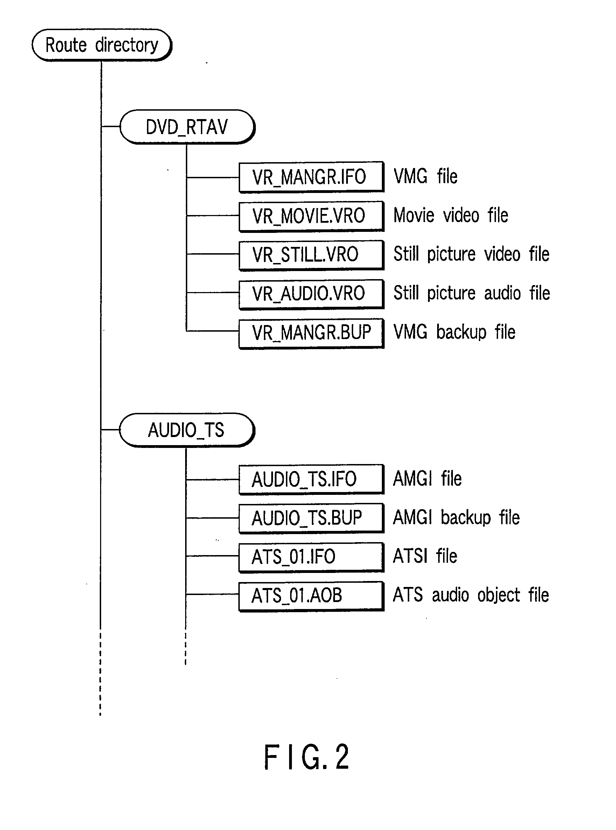

FIG. 2 shows one example of a directory structure of an information file recorded by the apparatus of FIG. 1 (universal DVD-RTR recorder compatible with DVD video and other DVD family in reproducing). The video files of air check recording of TV broadcast is managed by a sub directory called DVD-RTAV. The directory DVD-RTAV includes a VMG file for storing management information (VR_MANGR.IFO), a movie video file for storing dynamic image information (VR_MOVIE.VRO), a still picture video file for storing still picture information (VR_STILL.VRO), a still picture audio file for storing additional audio information (VR_AUDIO.VRO) for a still picture, and a VMG backup file storing backup information (VR_MANGR.BUP) of management information. Moreover, in DVD-RTR, one video file is stored in one disc. Furthermore, other audio files can be managed by a sub directory called AUDIO-TS.

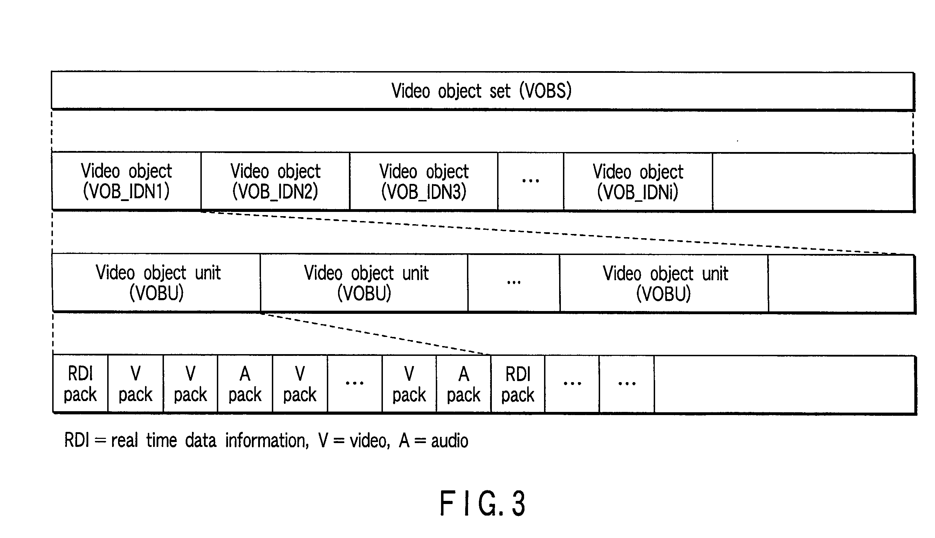

FIG. 3 shows one example of a data structure of information (video object VOB) recorded by the apparatus of FIG. 1. A content of the file stored in the movie video file VR_MOVIE.VRO of FIG. 2 is recorded as a group of one or more video objects VOB (video object set VOBS). Each VOB can be specified by a corresponding ID number (VOB_IDNi). Each VOB is constituted of a group of one or more video object units VOBU. Each VOBU includes video data constituted of one or more groups of pictures of MPEG (GOP), and is constituted of real time data information (RDI) pack, video (V) pack, audio (A) pack, and the like. The V or RDI pack is disposed in the top of each VOBU, and the top pack includes a system header (not shown). The system header is disposed only in the top pack in one VOBU.

Additionally, as not shown, each VOBU is constituted of a video part and audio part. The video part includes a V pack group and subpicture (SP) pack. The audio part includes an A pack group. The V pack group can include a sequence header, GOP header, I-picture, sequence end code, and subpicture unit. Moreover, A pack group can include a plurality of audio frames.

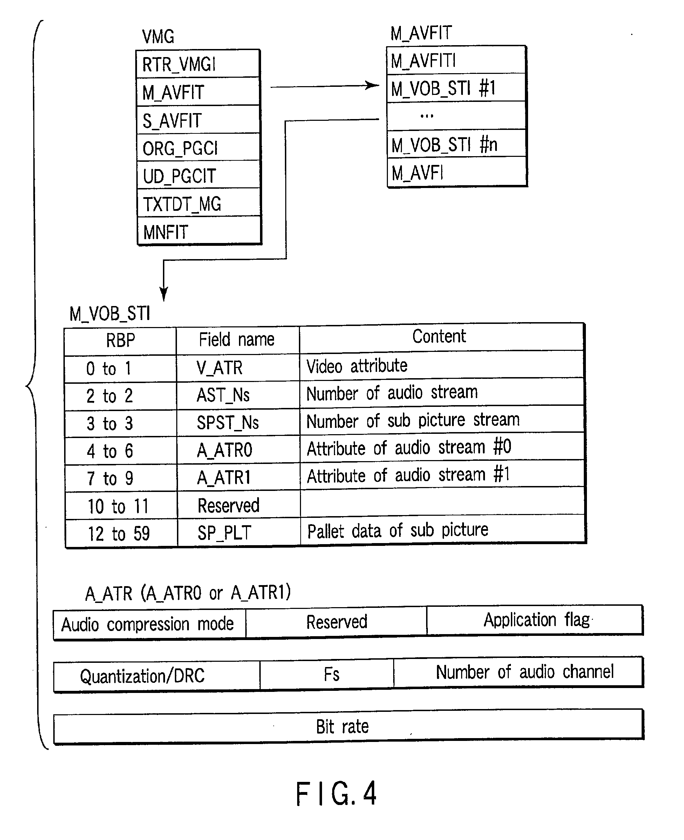

FIG. 4 shows one example of a data structure of management information (M_VOB_STI, and the like) recorded by the apparatus of FIG. 1. As shown in FIG. 4, the management information stored in the VMG file includes RTR video manager information RTR_VMGI, movie AV file information table M_AVFIT, still picture AV file information table S_AVFIT, original program chain information ORG_PGCI, user-defined program chain information table UD_PGCIT, text data manager TXTDT_MG, and manufacturer information MNFIT.

The table M_AVFIT includes movie AV file information table information M_AVFITI, one or more pieces of movie VOB stream information M_VOB_STI#1 to M_VOB_STI#n, and movie AV file information M_AVFI.

Each M_VOB_STI (each of #1 to #n) includes a video attribute V_ART, number of audio stream AST_Ns, number of subpicture stream SPST_Ns, audio attribute A_ARTO of stream #0, audio attribute A_ART1 of stream #1, reserved area, and subpicture color pallet SP_PLT.

The audio attribute A_ART (each of A_ARTO and A_ART1) includes an audio coding mode (audio compression mode), application flag, quantizing DRC, sampling frequency fs, number of audio channels, bit rate information, and the like.

For the audio coding mode (audio compression mode), (a) "000b" indicates Dolby AC3 (R), (b) "010b" indicates MPEG1 or MPEG2 having no extension bit stream, (c) "011b" indicates MPEG2 having the extension bit stream, and (d) "100b" indicates linear PCM. Eight modes can be identified by three-bit audio coding mode, but modes other than (a) to (d) are reserved for the future.

An application flag "00b" indicates that the corresponding audio stream includes audio data of a channel mode defined by "audio channel number", and "01b" indicates that the corresponding audio stream can include the audio data of a multi-channel mode (monaural, dual-monaural, and stereo). In the application flag "01b", "audio channel number" defines each mode of the corresponding audio stream.

In the audio coding mode "000b", quantization/DRC is set to "11b". In the audio coding mode "010b" or "011b", quantization/DRC is set to "00b (no dynamic range control data in the MPEG audio stream)" or "01b (there is dynamic range control data in the MPEG audio stream)". In the audio coding mode "100b", quantization/DRC is set to "00b (16 bits)". Other audio coding modes are reserved.

For the sampling frequency fs, "00b" indicates 48 kHz. Other sampling frequencies are reserved.

For the audio channel number, "0000b" indicates one channel (monaural), "0001b" indicates two channels (stereo), and "1001b" indicates two channels (dual-monaural). Moreover, "0010b" to "0111b" indicate multi-stereo (surround) or multi-monaural with three to eight channels. Here, when the audio coding mode (audio compression mode) is "100b (linear PCM)", two or less channel is set ("0000b", "0001b", or "1001b").

For the bit rate, 64 kbps to 384 kbps are set by "0000 0001b" to "0000 1011b" (for AC3 and MPEG1 audio). When the bit rate is "0000 1100b", 384 kbps is designated (for AC3). Moreover, with the bit rates "0000 1101b" and "0000 1110b", 768 kbps and 1536 kbps are designated, respectively (for linear PCM).

In summary, when the application flag is "00b", the corresponding audio stream is defined by the channel mode described in "audio channel number". When the application flag is "01b", the representative mode (monaural, dual-monaural, or stereo) of the corresponding audio stream is defined.

The same information as that of the "audio channel number" (monaural = "0000b", two channel stereo = "0001b", dual-monaural = "1001b") can be recorded in the data (header) of each audio stream. The audio channel number information is set in the audio decoder 630 of FIG. 1 at the start of reproducing. The audio decoder 630 decodes the audio stream reproduced with the set sound mode (monaural, stereo, or dual-monaural).

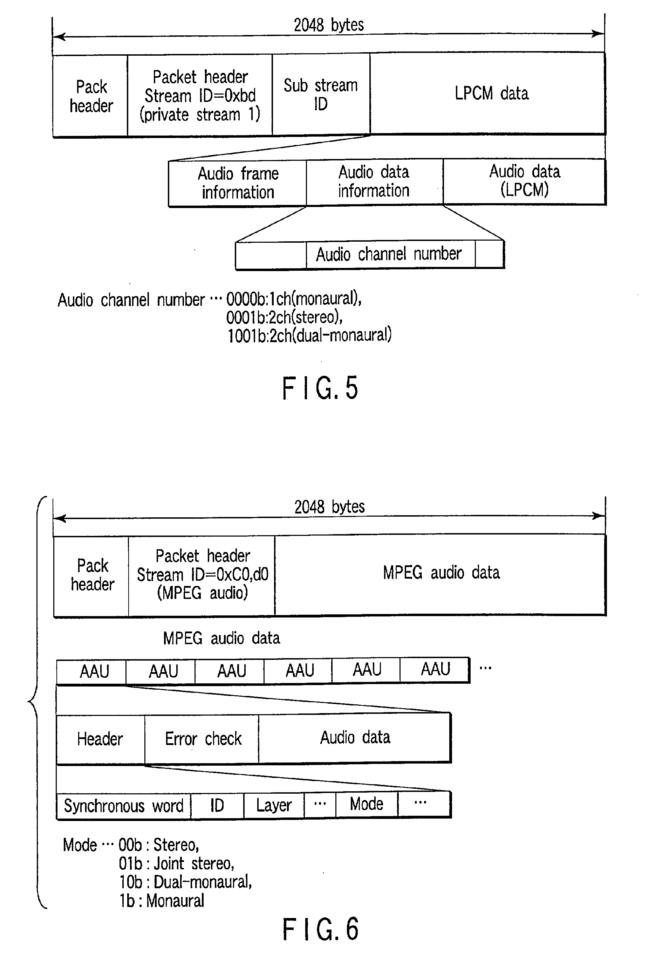

FIG. 5 shows a pack structure of audio information (linear PCM audio) recorded by the apparatus of FIG. 1. As shown in FIG. 5, one pack (2048 bytes) of the linear PCM (LPCM) is constituted of a pack header, packet header, sub stream ID, and LPCM data. The packet header includes stream ID = 0xbd (or "1011 1101b") indicating a private stream 1. Moreover, sub stream ID is "1010 000*b" indicating the linear PCM. Here, * denotes an audio stream number (0 or 1).

The LPCM data subsequent to the sub stream ID includes audio frame information, audio data information, and data main body of LPCM. Moreover, the audio data information can store "audio channel number" information (monaural = "0000b", two-channel stereo = "0001b", dual-monaural = "1001b"). TV broadcast recording of bilingual broadcast can be indicated by "audio channel number" = "1001b" indicating the dual-monaural mode.

FIG. 6 illustrates a pack structure of audio information (MPEG audio) recorded by the apparatus of FIG. 1. As shown in FIG. 6, one pack (2048 bytes) of MPEG audio is constituted of a pack header, packet header, and MPEG audio data. This packet header includes stream ID = 0(c0 (or "1100 000*b") indicating MPEG audio or 0(d0 (or "1101 000*b"). Here, * indicates audio stream number (0 or 1). For the MPEG audio, there is no sub stream ID.

The MPEG audio data subsequent to the packet header includes a plurality of audio access units (AAU) as a unit of audio decode. Here, AAU is a minimum unit which can individually be decoded to the audio signal), and constantly includes data having a constant sample number. Each AAU includes an error check code and audio data. The header includes a synchronous word, ID information, layer information, ..., mode information, and the like. (Other information such as a protection bit, bit rate index, sampling frequency, padding bit, and private bit are disposed before the mode information. Moreover, mode expansion information, copyrights information, original or copy information, and emphasis information are disposed after the mode information.)

The mode information is constituted of two bits, "00b" indicates stereo, "01b" indicates joint stereo, "10b" indicates dual channel (dual-monaural), and "11b" indicates single channel (monaural). The mode information is "10b" indicating dual-monaural in bilingual broadcast recording. During playback (or reproduction) of the disc after recording, the audio decoder 630 of FIG. 1 reads the mode information, and the mode is automatically changed to a mode (dual-monaural decode mode designated by "10b") designated by the content of the read mode information.

Various operations of the apparatus of FIG. 1 will next be described with reference to a flowchart. FIG. 7 is the flowchart showing the whole operation of the apparatus of FIG. 1. Each processing of the flowchart is controlled by the main MPU section 604 of FIG. 1. The main MPU section 604 executes a predetermined initial setting (step ST10) after starting the apparatus. Thereafter, key input from a user (key input from a remote controller (not shown) or operation command from reserving/recording program) is waited for. When there is a key input (step ST20), the input key is interpreted (changeover command of TV received channel, recording start command, reproducing start command, and the like) (step ST30).

When the input key is interpreted as "the changeover command of TV received channel", a processing of changing the received channel of the TV tuner 613 is performed (step ST40). The processing of changing the received channel includes not only a channel changing in the same broadcast band (e.g., 1 to 12 ch of VHF band) but also a channel changing over different broadcast bands (e.g., VHF 1 ch to BS digital 103 ch).

When the input key is interpreted as "recording start command", the recordable optical disc (DVD-RAM disc, and the like) 100 inserted to the disc drive 609 is subjected to a recording processing (step ST50).

When the input key is interpreted as "reproducing start command", a reproducing processing from the optical disc (DVD-RAM disc, DVD-RW disc, DVD-R disc, or DVD video disc) is performed (step ST60).

FIG. 8 is a flowchart of an operation for selecting a broadcast program in the apparatus of FIG. 1. Here, it is assumed that a sound language for use in default is stored beforehand in the work RAM 604a (or a not-shown data storing memory) regarding playback of DVD video by the apparatus of FIG. 1.

First, a channel change command from the user (or reserving/recording program) is issued to the TV tuner 613 (step ST400). The TV received channel is changed in accordance with the received command in the TV tuner 613 (e.g., the present TV received channel VHF 1 ch is changed to VHF 3 ch).

The sound mode of TV broadcast received by the TV tuner 613 after changing of the received channel is, for example, monaural broadcast, bilingual broadcast (dual-monaural broadcast: for example, for a content, main sound is Japanese, and sub sound is English), or stereo broadcast. The sound mode of the TV broadcast received by the TV tuner 613 is detected by the bilingual broadcast detector 900 (step ST402).

When the detected sound mode is not bilingual (dual-monaural) (no in step ST404), the TV tuner 613 outputs the sound of the received TV broadcast as two-channel stereo (step ST406). Additionally, when the detected sound mode is monaural, the same monaural signal is distributed and outputted to two channels (L = R).

When the detected sound mode is bilingual (dual-monaural) (yes in step ST404), the main MPU section 604 judges whether or not the sound mode of the TV broadcast is set in accordance with the audio language code set for the DVD video (step ST408). The user designates whether or not the sound mode is tuned to the audio language code set for the DVD video.

The user judges that the sound mode of the TV broadcast is not to be tuned to the audio language for the DVD video (no in step ST408). In this case, for example, a graphic user interface GUI (not shown) outputted to the display 608 or the external TV 637 is used to output the sound (dual-monaural: the main sound is Japanese and sub sound is English) of the received channel (subjected to changing designation) to two channels (L/R) as it is) (step ST410).

The user judges that the sound mode of the TV broadcast is to be tuned to the audio language (e.g., English) for the DVD video (yes in step ST408). In this case, the main MPU section 604 checks the language code for use in the DVD video from a parameter table (not shown) for the DVD video stored in the work RAM 604a. When the language code is, for example, English, the sub sound (English) of the received TV channel is distributed and outputted to two channels (L = R) (step ST412). Alternatively, when the language code is Japanese, the main sound (Japanese) of the received TV channel is distributed and outputted to the two channels (L = R) (step ST412).

Subsequently, the sound outputted in step ST406, ST410 or ST412 is recorded, for example, in the DVD-RAM disc 100.

Additionally, a case in which the language code for present use in the DVD video is the same as the language of the subsound of bilingual broadcast has been described above. However, when the language code for present use in the DVD video is different from the language of the subsound of bilingual broadcast, several variations are considered in processing methods of steps ST408 and ST412.

That is, when the present language setting of the DVD video is other than Japanese (e.g., German), and even when the language of the subsound is any language (e.g., English, German, or French), there is a method of distributing and outputting the subsound to two channels (L = R). This method is not suitable for a case in which the MPU section 604 cannot obtain the information for specifying the type of the subsound language of the received bilingual broadcast.

Alternatively, when the language setting of the DVD video is English, there is a method of distributing and outputting the subsound (any language) to two channels (L = R). This method is suitable for distributing and outputting the subsound of any foreign language (there is usually a highest possibility of English) to two channels (L = R).

As described above, when the sound language setting of the DVD video is reflected in setting of recording/reproducing of DVD-RTR, a digital recording/reproducing apparatus (DVD-RTR recorder) can be realized without intricacy of setting.

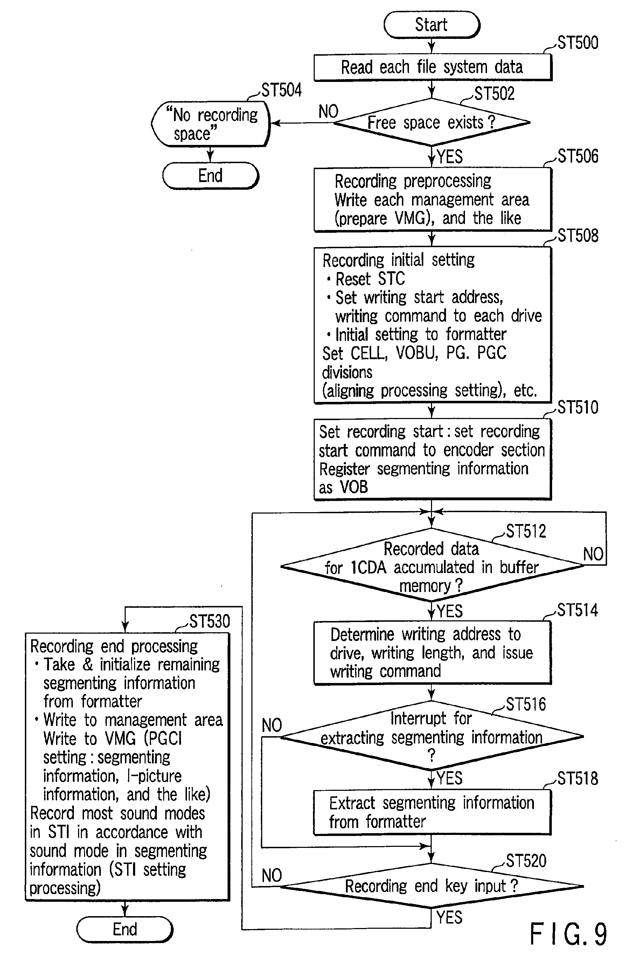

FIG. 9 is a flowchart of a recording operation in the apparatus of FIG. 1. The main MPU section 604 reads each file system data from the disc 100 inserted in the disc drive 609 (step ST500). A used capacity is calculated from the read data, and it is checked whether or not there is a free space (or a vacant capacity) in the disc 100. When there is no free space (no in step ST502), a warning indicating that "there is no recording space" is displayed in the display 608 or TV 637 (step ST504), and the processing is ended. When there is a free space (yes in step ST502), a managing file (VMG file) is read from the disc 100. When there is not managing file, a new VMG file is prepared and developed in the RAM 604a (step ST506).

After recording preprocessing is performed (step ST506), setting shifts to a recording initial setting (step ST508). In the recording initial setting, the STC 650 is reset, a writing start address and writing command are set to each drive (disc drive 609, and the like), and the formatter 619 is subjected to initial setting (setting of divisions of cell CELL, video object unit VOBU, program PG, and program chain PGC), and the like. Subsequent to the initial setting, recording start setting is performed (step ST510). In the recording start setting, the recording start command is set to the encoder section 601, and segmenting information (division set in step ST508) is registered as the video object VOB.

When recorded data for "one contiguous data area (DCA)" is stored in the temporary storage 700 (yes in step ST512), the writing address and writing length are determined in the disc drive 609, and writing command is issued to the disc drive 609 (step ST514). When there is an interrupt for taking the segmenting information (yes in step ST516), the segmenting information is extracted from the formatter 619 (step ST518). In other words, the image and sound signals taken into the encoder section 601 is A/D converted, respectively, and compressed by the encoders 616, 617. When a constant amount (one CDA) of compressed data is accumulated (yes in step ST512), the data is recorded in the disc 100. In this case, the segmenting information of the compressed data is taken into the work RAM 604a (step ST518). During recording (no in step ST520), the processing of steps ST512 to ST518 is repeated.

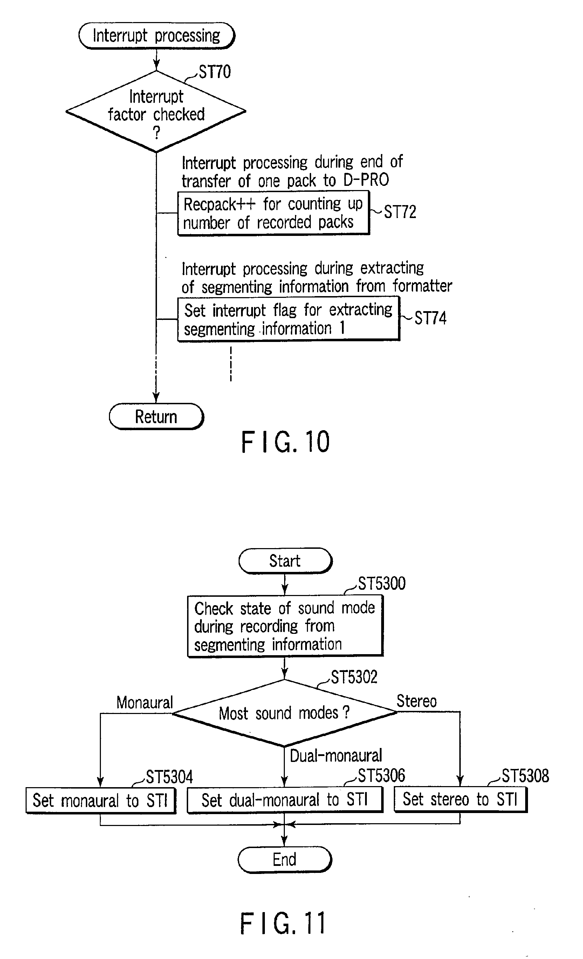

When the recording ends (yes in step ST520), a recording end processing is executed (step ST530). In the recording end processing, the remaining segmenting information is taken from the formatter 619 and initialized, and setting of program chain information PGCI (segmenting information, I-picture information, and the like) is written into the management information VMG. In other words, the remaining segmenting information is taken into the work RAM 604a, and the management information VMG is updated based on the taken segmenting information. In this case, the sound mode having a largest number of packs in recording is recorded in stream information STI (M_VOB_STI# of FIG. 4) in accordance with the sound mode (monaural, dual-monaural, or stereo) of the segmenting information (STI setting processing described later with reference to FIG. 11). Generally speaking, the stereo sound mode is most in TV recording of a music program, and the dual-monaural mode is mot in TV recording of foreign movie with Japanese subtitles.

FIG. 10 is a flowchart of an interrupt processing in the apparatus of FIG. 1. In the interrupt processing, there are various factors for an interrupt, and first the interrupt factors are checked (step ST70). When the interrupt factor is, for example, "interrupt processing at the end of transfer of one pack to D-PRO 610", an interrupt processing Recpack++ for counting up the number of recording packs is executed (step ST72). Moreover, when the interrupt factor is, for example, "interrupt processing during extracting of segmenting information from formatter 619", an interrupt flag for extracting segmenting information 1 is set (step ST74). As not shown, an interrupt flag for extracting segmenting information x (x = 1, 2, 3, ...) is appropriately performed. After the interrupt processing for each interrupt factor is performed as described above, the processing returns to another flow of processing.

FIG. 11 is a flowchart of a setting processing of stream information (STI) in the apparatus of FIG. 1. This processing is executed as a part of step ST530 of FIG. 9. First, a state (monaural, dual-monaural, or stereo) of the sound mode during recording is checked from the segmenting information taken into the work RAM 604a (step ST5300). The sound mode having a largest number of recordings is checked among the checked sound modes (step ST5302). When the monaural sound mode has the largest number of recordings, the "audio channel number" of the stream information STI (M_VOB_STI# of FIG. 4) is set to "monaural: 0000b" (step ST5304). When the dual-monaural sound mode has the largest number of recordings, the "audio channel number" of the stream information STI is set to "dual-monaural: 1001b" (step ST5306). When the stereo sound mode has the largest number of recordings, the "audio channel number" of the stream information STI is set to "2 ch stereo: 0001b" (step ST5308).

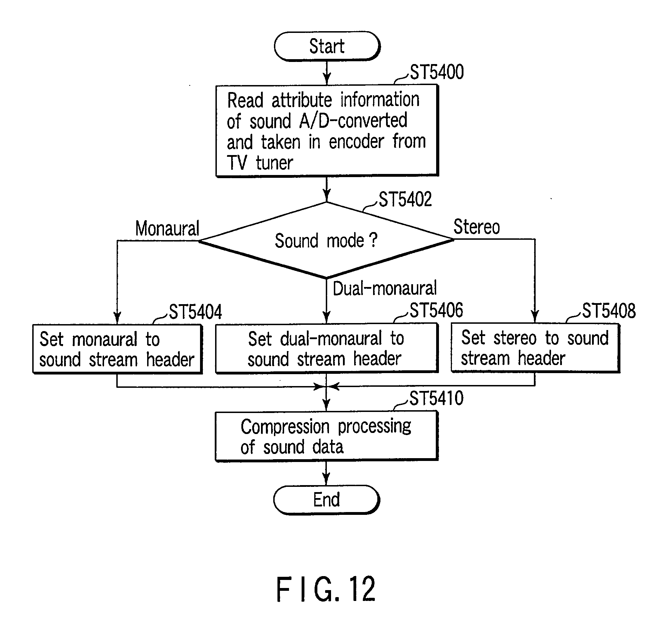

FIG. 12 is a flowchart of an encoding processing of audio data in the apparatus of FIG. 1. First, the main MPU section 604 reads attribute information (A_ATR of FIG. 4) of a sound A/D converted and taken into the encoder section 601 from the TV tuner 613 (step ST5400). The sound mode is checked from the content of the read attribute information ("audio channel number") (step ST5402). When the sound mode is monaural, monaural is set in the header of a sound stream (FIG. 6) (step ST5404). When the sound mode is dual-monaural, dual-monaural is set in the header of the sound stream (step ST5406). When the sound mode is stereo, stereo is set in the header of the sound stream (step ST5408). After the information of the sound mode is set in the header of the sound stream, a compression processing of the sound data (e.g., compression processing of MPEG audio) is executed (step ST5410). Additionally, when the sound data is recorded as linear PCM, setting of steps ST5404 to ST5408 is performed with respect to the "audio channel number" of FIG. 5, and the processing of step ST5410 corresponds to linear PCM encoding.

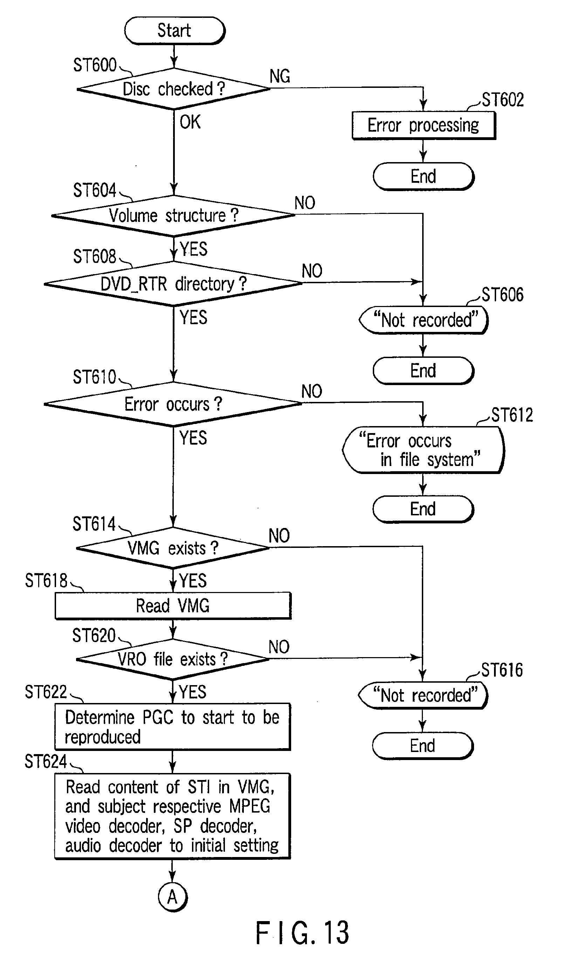

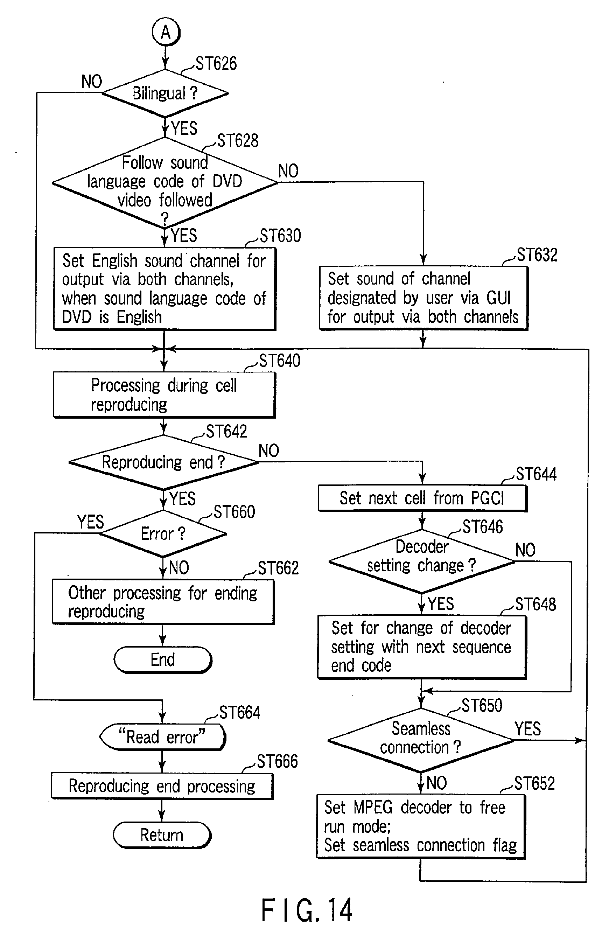

FIGS. 13 and 14 are flowcharts showing the whole reproducing operation in the apparatus of FIG. 1. First, reading is started from lead-in of the disc 100 inserted in the disc drive 609, and it is checked whether or not the disc is normally read (step ST600). The disc is not normally read and it is judged that the disc 100 has a problem (NG in step ST600). Then, an error processing (displaying of error in the display 608 and/or the TV 637) is performed (step ST602), and the reproducing processing ends. On the other hand, the disc 100 can normally be read (OK in step ST600), and it is then checked whether or not the information of a volume structure is recorded in the disc 100 (step ST604). When the volume structure is not recorded (no in step ST604), "not recorded" is displayed in the display 608 and/or the TV 637 (step ST606), and the reproducing processing ends.

When the volume structure is recorded (yes in step ST604), presence/absence of the directory of DVD-RTR (DVD-RTAV in FIG. 2) is checked in a recorded hierarchy file (step ST608). If there is no DVD-RTR (DVD-RTAV) directory (no in step ST608), "not recorded" is displayed (step ST606), and the reproducing processing ends. If there is DVD-RTR (DVD-RTAV) directory (yes in step ST608), the presence/absence of the error is checked (step ST610). If there is an error (yes in step ST610), "error has been found in file system" is displayed in the display 608 and/or the TV 637 (step ST612) and the reproducing processing ends.

If there is no error (no in step ST610), recording of management information VMG (VR_MANGR.IFO of FIG. 2) is checked (step ST614). When VMG is not recorded (no in step ST614), "not recorded" is displayed (step ST616) and the reproducing processing ends. when the VMG is recorded (yes in step ST614), VMG file is read (step ST618), and preparation for reproducing is performed. Here, the main MPU section 604 reads the stream information STI which belongs to the VOB to be reproduced, and sets the respective decoders (627 to 630) in the decoder section 602 in accordance with the information in STI.

When VRO file (VR_MOVIE.VOR of FIG. 2, and the like) is not recorded in the read VMG directory (no in step ST620), "not recorded" is displayed (step ST616) and the reproducing processing ends. when the VRO file is recorded in the read VMG directory (yes in step ST620), a program chain to be reproduced (original PGC, user-defined PGC#1, user-defined PGC#2, and the like) is determined (step ST622). Subsequently, the content of the stream information STI (any one of M_VOB_STI#1 to #n) in VMG read in step ST618 is read, and the MPEG video decoder 628, subpicture decoder 627, and audio decoder 630 of FIG. 1 are subjected to the initial setting (step ST624). This continues to <node A> of FIG. 14.

The stream information STI read in step ST624 includes the audio attribute information A_ATR (see FIG. 4) which has the "audio channel number". The main MPU section 604 of FIG. 1 checks whether or not the sound mode of the title to be reproduced is "bilingual" (i.e., whether or not "audio channel number" is "1001b" indicating the dual-monaural mode) based on the content ("audio channel number") of the stream information STI (step ST626). With the bilingual mode (yes in step ST626), it is further checked whether or not the audio language code of the DVD video is to be followed (step ST628).

When the code is followed (yes in step ST628), the audio language code of the DVD video (set by the user during initial setting, e.g., English) is read from the work RAM 604a, and the subsound (English) of the bilingual mode is selected in accordance with sound language code (English). The audio decoder 630 is set so that the selected subsound is outputted via both channels (L/R) (step ST630). When the code is not followed (no in step ST628), the sound (e.g., Japanese main sound or English sub sound) designated for reproducing of DVD-RTR by the user via GUI is selected from the sound of the recorded TV channel. The audio decoder 630 is set so that the selected subsound is outputted via the both channels (L/R) (step ST632). When the sound mode of the title to be reproduced is stereo (no in step ST626), the processing of steps ST628 to ST632 is slipped. Then, the audio decoder 630 is set so that the recorded stereo sound is outputted via the both channels (L/R).

After the audio decoder 630 is set as described above, a cell reproducing processing (step ST640) is performed. During reproducing (no in step ST642), the next cell is set in accordance with the program chain information PGCI (original PGCI or user-defined PGCI) in the VMG file (step ST644). In this case, when the sound mode changes (to the stereo mode from the dual-monaural mode), and the setting of audio decoding is changed (yes in step ST646), the setting of the audio decoder 630 is changed by the next sequence end code (step ST648). When the setting of the audio decoding is not changed (no in step ST646), the setting of step ST648 is not changed. When the reproducing continues to the next cell in a seamless mode (yes in step ST650), the processing returns to the cell reproducing processing of step ST640. When the reproducing continues to the next cell in a non-seamless mode (no in step ST650), the MPEG decoder is set to a free run mode, a seamless connection flag (not shown) is set (step ST652), and the processing returns to the cell reproducing processing (step ST640).

After the cell reproducing ends (yes in step ST642), the error is checked (step ST660). When there is no error (no in step ST660), the other processing for ending the reproducing is executed (step ST662), and the reproducing processing of FIGS. 13 and 14 ends. When the error occurs at the end of reproducing (yes in step ST660), "read error occurs" is displayed in the display 608 and/or the TV637 (step ST664), the reproducing end processing (step ST666) is executed, and the processing returns to other processing state (e.g., the key input waiting state of step ST20 of FIG. 7).

Additionally, the processing of steps the ST626, ST628, ST630 and ST632 of FIG. 14 corresponds to the processing of steps ST404, ST408, ST412 and ST410 of FIG. 8.

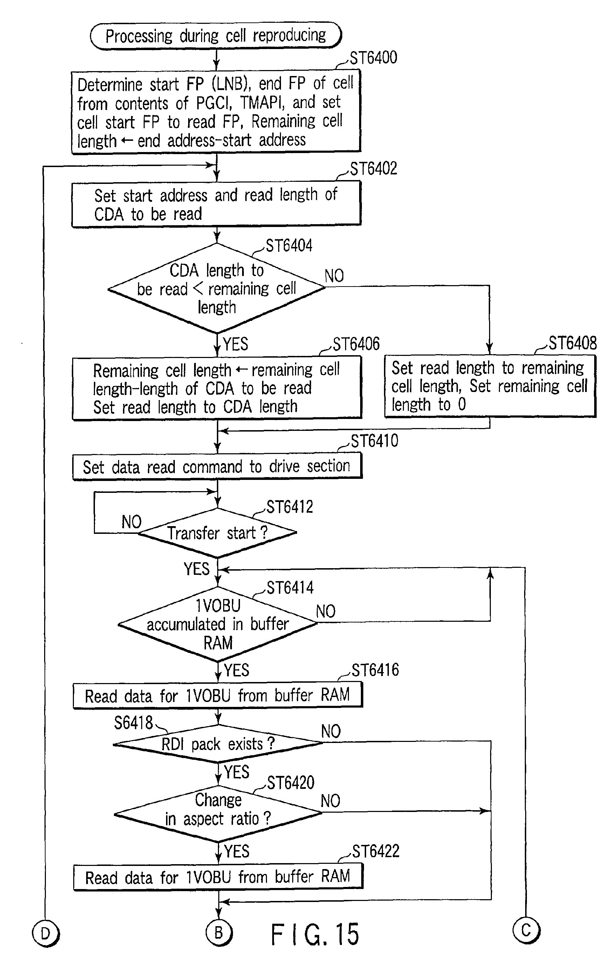

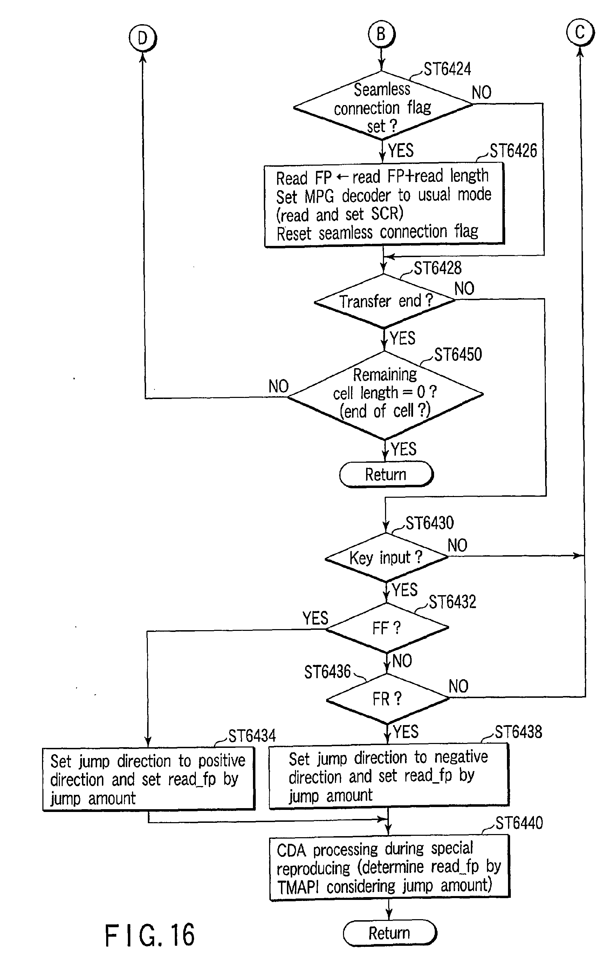

FIGS. 15 and 16 are flowcharts showing one example of a concrete content of a cell reproducing processing (step ST640) in the apparatus of FIG. 1. First, a cell start position FP (logic block number LBN) and end FP (LBN) are determined based on the program chain information PGCI and time map information TMAPI included in the management information VMG. Subsequently, read FP is set as cell start FP, and "end address - start address" is set as a remaining cell length (step ST6400). A start address and read length of contiguous data area CDA to be read are set (step ST6402). When the read CDA length is smaller than a remaining cell length (yes in step ST6404), "remaining cell length-length of the CDA to be read" is set as the remaining cell length, and the read length is set as CDA length (step ST6406). On the other hand, when the length of the CDA to be read is not less than the remaining cell length (no in step ST6406), the read length is set as the remaining cell length, and the remaining cell length is set to 0 (step ST6408).

Subsequently, the data read command is set to the disc drive 609 (step ST6410), and transfer start of the read data is waited for. The transfer starts (yes in step ST6412), and one VOBU of the read data is accumulated in the buffer memory (not shown). When the one VOBU of data is accumulated in the buffer memory (yes in step ST6414), one VOBU of data is read from the buffer memory (step ST6416), and the pack constituting the VOBU is checked. When there is RDI pack (FIG. 3) in the top of VOBU (yes in step ST6418), and there is a change in aspect ratio (yes in step ST6420), a direct-current component of a chromatic signal (C signal) outputted via video terminal S after decoding is appropriately changed (step ST6422). This continues to <node B> of FIG. 16.

When the seamless connection flag (set in step ST652 of FIG. 14) in the VOBU data read in step ST6416 is set (yes in step ST6424), "read FP+read length" is set as read FP, and MPEG decoder is set to a normal mode. Moreover, a system clock reference SCR is appropriately read and set, and the seamless connection flag is reset (step ST6426).

When the transfer started in step ST6412 of FIG. 15 does not end (no in step ST6428), there is a key input in step ST20 of FIG. 7 (yes in step ST6430), and a special reproducing mode is fast forward FF (yes in step ST6432), a jump direction for the fast forward is set to a positive direction, and a read position read_fp is set in accordance with the jump amount (step ST6434). On the other hand, when a special reproducing mode is not the fast forward FF but a fast rewind FR (no in step ST6432, yes in step ST6436), the jump direction for the fast rewind is set to a negative direction, and the read position read_fp is set in accordance with the jump amount (step ST6438). When the read position read_fp during FF or FR operation, a processing of contiguous data area DCA for the special reproducing (FF or FR) is performed (step ST6440), and the processing returns to step ST642 of FIG. 14.

Additionally, in DCA processing of step ST6440, the read position read_fp can be determined based on the time map information TMAPI referred to in step ST6400 of FIG. 15 in consideration of the jump amount. Moreover, if there is no key input (no in step ST6430), or even if the key input is neither FF key nor FR key (no in step ST6432, no in step ST6436), the processing returns to step ST6414 of FIG. 15 via <node C>.

When the transfer started in step ST6412 of FIG. 15 ends (yes in step ST6428), and the remaining cell length is zero (yes in step ST6450), this is an end of the cell. Therefore, the processing of FIGS. 15 and 16 ends, and the processing returns to step ST642 of FIG. 14. When the remaining cell length is not zero (no in step ST6450), the processing returns to step ST6420 of FIG. 15 via <node D>.

Additionally, in the aforementioned embodiment, "the setting which is associated with the language of the sound already set in DVD video reproducing" is automatically reflected in setting of DVD video recording. As expansion/modification, "the setting which is associated with the language of the set sound" can automatically be reflected in setting a received sound of the TV tuner 613 of FIG. 1 (or a single TV tuner unit connected in i link (R) via IEEE 1394 interface (not shown)). Concretely, the tuner received sound having the content set in step ST412 of FIG. 8 can not only be recorded in the disc 100 of FIG. 1 but also be outputted via the speaker 633 of FIG. 1 (without being recorded in the disc 100).

Furthermore, similarly as the method of automatically reflecting the setting associated with the set language in the setting of video recording", "the setting associated with the language of the subpicture already set in the DVD video reproducing" can automatically be reflected in selecting the language displayed in the monitor during reception of character broadcast.

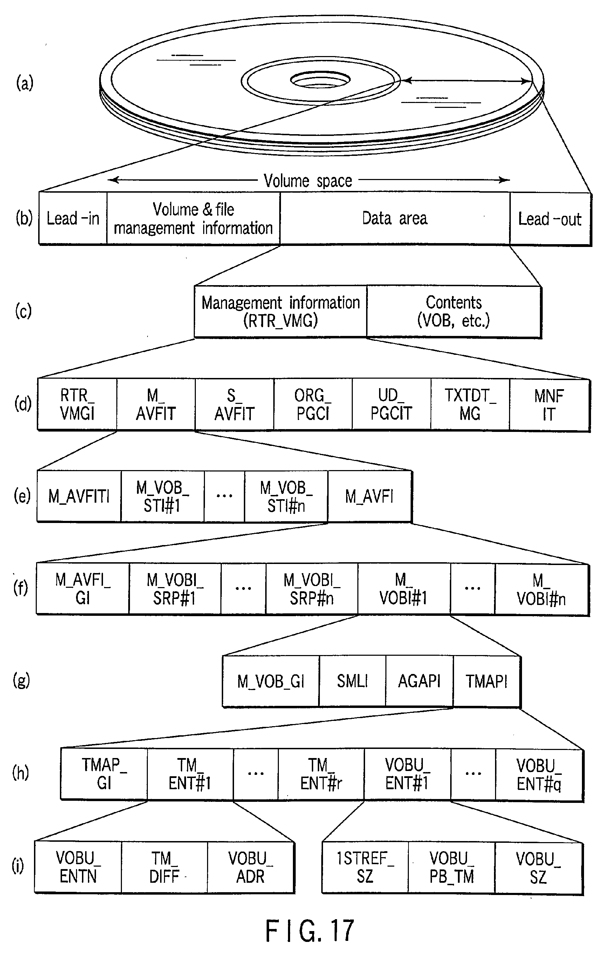

FIG. 17 is a diagram showing contents of management information to be recorded by the apparatus of FIG. 1. Here, explanation will be given to a case where information of the volume space shown in FIG. 17(b) is recorded in the information recording area of a DVD-RAM disc (100) shown in FIG. 17(a). (Note that the data structure of information to be recorded on storage unit (such as an HDD) 700 may be the same.)

The volume space of the disc (100) includes, as shown in FIG. 17(b), a recording area of a volume & file management information and a data area of user data (AV information or the like). As shown in FIG. 17(c), the data area can record management information RTR_VMG and contents (video object VOB constituting the AV information, or the like ) of the user data. Management information RTR_VMG is stored as a file of video manager VMG.

Management information RTR_VMG includes, as shown in FIG. 17(d), RTR video manager information RTR_VMGI, movie AV file information table M_AVFIT, still picture AV file information table S_AVFIT, original program chain information ORG_PGCI, user-defined program chain information table UD_PGCIT, text data manager TXTDT_MG, and manufacturer's information MNFIT.

Incidentally, program chain information PGCI has a data structure representing a whole reproduction of program chain PGC, and the PGC represents a sequence of program PG (or a program set). The PG is a logical unit of the recorded contents. The PG is recognized or defined by a user. The PG in a program set is formed of one or more original cells (which are reproduction units of the initial recorded contents), and the PG is defined only within the ORG_PGCI. In other words, the ORG_PGCI is the information by which an order of reproduction of cells corresponding to the initial recorded contents is described. On the other hand, the UD_PGCIT denotes a table which describes one or more PGCI's being subjected to a user's edition after recording.

The M_AVFIT includes, as shown in FIG. 17(e), movie AV file information table information M_AVFITI, one or more pieces of movie VOB stream information M_VOB_STI#1 to M_VOB_STI#n, and movie AV file information M_AVFI. The M_AVFI includes, as shown in FIG. 17(f), movie AV file information general information M_AVFI_GI, one or more movie VOB information search pointers M_VOBI_SRP#1 to M_VOBI_SRP#n, and pieces of movie VOB information M_VOBI#1 to M_VOBI#n corresponding in number to the number of the search pointers.

Each of the M_VOBI#'s includes, as shown in FIG. 17(g), movie VOB general information M_VOBI_GI, seamless information SMLI, audio gap information AGAP, and time map information TMAPI. The TMAPI may be utilized when a special playback (e.g., a playback of cells in a special order defined by an independent user using the user-defined PGC) or a time search is to be performed.

The TMAPI includes, as shown in FIG. 17(h), time map general information TMAP_GI, one or more time entries TM_ENT#1 to TM_ENT#r, and one or more VOBU_ENT#1 to VOBU_ENT#q.

Each TM_ENT includes, as shown in FIG. 17(i), VOBU_ENTN indicating the corresponding VOBU entry number, TM_DIFF indicating a time difference between the playback start time of the VOBU being designated by the time entry and the calculated playback time, and VOBU_ADR indicating the address of the target VOBU. In the NTSC, when a time unit TMU is represented by 600 fields (or in the PAL, when the time unit TMU is represented by 500 fields), the above-mentioned "calculated playback time" with respect to the time entry #j can be represented by TMU x (j-1) + TM_OSF. The VOBU_ADR represents the target VOBU address by the total size of the preceding VOBU's of the VOB wherein the size of the VOBU is expressed in unit of a sector.

According to the data structure as exemplified above, when a playback has to be started from an intermediate point of a VOBU, it is necessary to determine its access point. This access point is called a time entry point. The time entry point is located at a place being deviated from the position, indicated by the movie address information of the VOBU, by the time difference, indicated by the time difference information TM_DIFF in the time entry TM_ENT. This time entry point is a specific playback start point (or time search point) indicated by the time map information TMAPI.

Each VOBU entry includes, as shown in FIG. 17(i), reference picture size information 1STREF_SZ, VOBU playback time information VOBU_PB_TM, and VOBU size information VOBU_SZ. Here, the VOBU_PB_TM indicates the playback time of the corresponding VOBU in unit of a video field. The reference picture size information 1STREF_SZ indicates the size of the first reference picture (corresponding to an I-picture of the MPEG) in the corresponding VOBU in unit of a sector.

Incidentally, in the VOBU entry, the "time interval of VOBU's" is represented by the number of fields. However, as another method, the "time interval of VOBU's" may be represented by the count value of a clock counter, the count value indicating the interval from one VOBU to the next VOBU. More specifically, the "time interval of VOBU's" may be represented by the differential value of the "presentation time stamp PTS at the leading point of one VOBU" and the "PTS value at the leading point of the immediately followed VOBU." In other words, it is possible to represent the time interval in a specific unit by the differential value of clock counts within that unit.

As described above, according to the digital recording/reproducing apparatus of the present invention, the setting associated with the language of the sound (already completed) is reflected in setting of recording/reproducing of DVD-RTR, and setting intricacy can be solved.

## Claims

1. A digital recording/reproducing apparatus in which an information medium (100; DVD-RAM disc, IC memory, HDD, or the like) for storing audio-visual information (TV broadcast signal, DVD playback signal, etc.) corresponding to a plurality of types of audio languages (English, Japanese, etc.) and sound mode information (information indicating monaural, dual-monaural, stereo, etc.) associated with these audio languages is used, **characterized in that**
said apparatus is configured to record the audio-visual information on the information medium (100) or to reproduce the audio-visual information from the information medium (100) based on at least one of a plurality of different formats (DVD-RTR, DVD-Video, etc.).

2. The apparatus according to claim 1,
**characterized by** comprising:
first judging means (900, 604; ST404) for judging whether said audio-visual information includes said plurality of types of audio languages; and
second judging means (604; ST408) for judging whether a specified audio language (e.g., English) set in said first format (e.g., DVD-Video) is applied to said second format (e.g., DVD-RTR), when said audio-visual information includes said plurality of types of audio languages,
and **characterized in that** the specified audio language (English) is utilized (ST412) in recording or reproducing based on said second format (DVD-RTR), when (yes at ST408) the specified audio language (English) set in said first format (DVD-Video) is applied to said second format (DVD-RTR).

3. The apparatus according to claim 2,
**characterized in that** said second format (DVD-RTR) has predetermined management information (VMG), that the management information (VMG) includes one or more pieces of stream information (STI), and that said sound mode information (information indicating monaural, dual-monaural, stereo, etc.) is recorded in each stream information (STI).

4. The apparatus according to claim 2,
**characterized in that** an audio data portion of said audio-visual information (e.g., TV broadcast signal) is recorded in said information medium (100) by a data unit (AAU) having a predetermined header,
and that said apparatus further comprises:
first means (ST5402) for judging a sound mode (monaural, dual-monaural, stereo, etc.) of said audio data to be recorded in said information medium (100); and
second means (ST5404-ST5408) for setting said judged sound mode in the header of said data unit (AAU).

5. The apparatus according to claim 1, which records audio-visual information of television broadcast in a recordable optical disc (100), or reproduces the audio-visual information from the recorded optical disc (100), said apparatus being **characterized by** comprising:
a bilingual broadcast detector (900, 604; ST402-ST404) for detecting whether said television broadcast is bilingual broadcast;
a sound changeover section (604; ST412) for selecting and outputting a sound of a language corresponding to a specified audio language (e.g., English) via said bilingual broadcast, when said television broadcast is the bilingual broadcast and the specified audio language (English) set in reproducing the sound from said recorded optical disc (100) is followed; and
a sound output section (604; ST406) for outputting the sound included in the audio-visual information of the broadcast as it is, when said television broadcast is not the bilingual broadcast.

6. The apparatus according to claim 1, having a function for recording audio-visual information of television broadcast in a recordable optical disc (100), or reproducing the audio-visual information from the recorded optical disc (100),
**characterized in that** an audio data portion of said audio-visual information is recorded as audio stream data in said recordable optical disc (100), and
the sound mode of said audio data to be recorded in said recordable optical disc (100) is set and constituted as a part of said audio stream data.

7. The apparatus according to claim 1, having a function for recording audio-visual information of television broadcast in a recordable optical disc (100), or reproducing the audio-visual information from the recorded optical disc (100),
**characterized in that** management information (VMG) including one or more pieces of stream information (STI/A_ART) is recorded (ST530; or ST5304-ST5308) in said recordable optical disc (100), and information of a sound mode is recorded in each piece of stream information (STI).

8. The apparatus according to claim 1, having a function for recording audio-visual information including a multilingual sound in a recordable optical disc (100), or reproducing the audio-visual information including the multilingual sound from the recorded optical disc (100),
**characterized in that** management information (VMG) including one or more pieces of stream information (STI) is recorded (ST530; or ST5304-ST5308) in said recordable optical disc (100), and information of a sound mode is recorded in each piece of stream information (STI/A_ART),
and that during reproduction of said recordable optical disc (100), when said sound mode information extracted from said stream information (STI) indicates the multilingual sound, and if the multilingual language reproduced from said recorded optical disc (100) is a specified language (e.g., English) (yes at ST408), then setting (ST412) for outputting only a sound of a specified language (English) is performed.

9. A television tuner (613) which can be used with the apparatus of claim 1, said apparatus having a function for recording audio-visual information of television broadcast in a recordable optical disc (100), or reproducing the audio-visual information from the recorded optical disc (100), said tuner being **characterized by** comprising:
a bilingual broadcast detector (900, 604; ST402-ST404) for detecting whether said television broadcast is bilingual broadcast;
a sound changeover section (604; ST412) for selecting and outputting a sound of a language corresponding to a specified audio language (e.g., English) via said bilingual broadcast, when said television broadcast is the bilingual broadcast and the specified audio language (English) set in reproducing the sound from said recorded optical disc (100) is followed; and
a sound output section (604; ST406) for outputting the sound included in the audio-visual information of the broadcast as it is, when said television broadcast is not the bilingual broadcast.

10. A digital recording/reproducing method in which an information medium (100) for storing audio-visual information (TV broadcast signal, DVD playback signal, etc.) corresponding to a plurality of types of audio languages (English, Japanese, etc.) and sound mode information (information indicating monaural, dual-monaural, stereo, etc.) associated with these audio languages is used to perform recording or reproducing based on at least one of first and second formats (DVD-RTR, DVD-Video, etc.), said method comprising:
judging (ST404) whether said audio-visual information includes said plurality of types of audio languages;
judging (ST408) whether a specified audio language (e.g., English) set in said first format (e.g., DVD-Video) is applied to said second format (e.g., DVD-RTR), when said audio-visual information includes said plurality of types of audio languages; and
utilizing (ST412) the specified audio language (English) in recording or reproducing based on said second format (DVD-RTR), when (yes at ST408) the specified audio language (English) set in said first format (DVD-Video) is applied to said second format (DVD-RTR).
